# EUROPÄISCHE PATENTSCHRIFT

(11) **EP 1 133 040 B1**
(45) Veröffentlichungstag und Bekanntmachung des Hinweises auf die Patenterteilung: **18.11.2009**
(21) Anmeldenummer: 01104547.3
(22) Anmeldetag: 05.03.2001
(51) Int. Cl.: H02G 3/30

(54) **Kabelhalter für Fahrzeugstrukturen**
Cable support for vehicle structures
Support de câbles pour structures de véhicules

(30) Priorität: 06.03.2000 DE 10010935
(43) Veröffentlichungstag der Anmeldung: 12.09.2001
(73) Patentinhaber: EADS Deutschland GmbH, 81663 München (DE)
(72) Erfinder: Koziol, Siegmund, 85664 Hohenlinden (DE)

(56) Entgegenhaltungen:
- DE-A- 19 806 628
- US-A- 4 960 253
- US-A- 5 927 041

## Beschreibung

Die Erfindung betrifft einen Kabelhalter zur Befestigung an Fahrzeugstrukturen, und insbesondere an Strukturen von Luftfahrzeugen.

Ein Kabelhalter mit den Merkmalen des Oberbegriffs des Anspruchs 1 ist aus US A 4 960 253 bekannt.

Aus dem allgemeinen Stand der Technik sind bisher nur entsprechend geformte Anschlußelemente an Fahrzeugstrukturen bekannt, an denen mittels aus dem Stand der Technik bekannten Kabelbindern Kabel befestigt werden können. Diese Anschlußstücke können die Form von Ösen, Hacken aufweisen. Nachteilig an diesen Kabelhaltern ist, daß diese selbst Bestandteil der Struktur sind und dadurch im Zusammenhang mit der Entwicklung der gesamten Struktur sehr aufwendig sind.

Aus der DE 30 13 750 A1 ist ein Kabelhalter zur Befestigung von Kabeln mittels Kabelbindern bekannt, welcher aus einer Leiste mit einem plattenförmigen Stegbereich besteht, auf dessen Oberseite sich von dort erhebende Ösen in gleichmäßigen Abständen angeordnet sind. Aus der DE 90 05 666 U1 ist ein Blechteil bekannt, welches zur Befestigung von Kabeln mit Kabelbindern mit einer oder mehrerenr Ösen versehen wird.

Es ist die Aufgabe der Erfindung, einen Kabelhalter für Fahrzeug-Strukturen zu schaffen, der an einer Vielzahl von Orten der Struktur einfach anbringbar ist und bei einer Vielzahl von Kabelverläufen verwendbar ist, leicht montierbar ist und mit der eine große Packungsdichte der Kabel erreichbar ist.

Diese Aufgabe wird mit dem Merkmal des Anspruchs 1 gelöst. Andere Ausführungsformen sind in den Unteransprüchen angegeben.

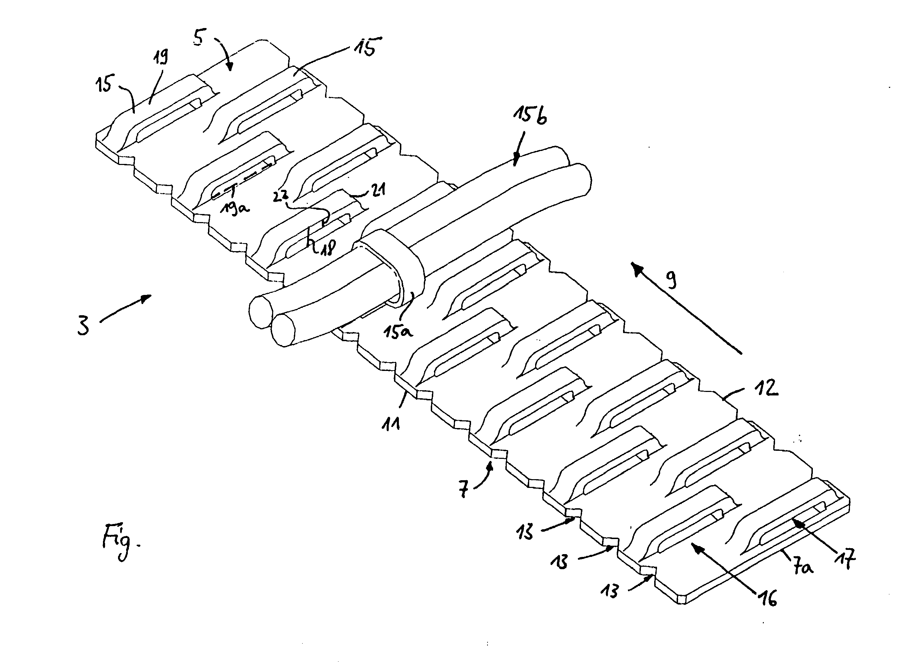

Im folgenden wird die Erfindung an Hand der beigefügten Figur beschrieben, die den erfindungsgemäßen Kabelhalter in einer perspektivischen Sicht zeigt, auf dem beispielsweise ein Abschnitt eines Kabelbündels befestigt ist.

Der erfindungsgemäße Kabelhalter 1 hat die Form einer Platte 3 mit einer Oberseite 5 und einer Unterseite 7. Da die Platte auf eine entsprechende Auflagefläche der Fahrzeugstruktur aufklebbar ist, kann die Unterseite 7 je nach Anwendungsfall gekrümmt sein, wie es die Kantenlinie 7a in der Figur zeigt. Die Längsrichtung 9 der länglichen Platte 3 verläuft quer zur vorgesehenen Richtung der an dem Kabelhalter 1 anzubindenden Kabel 15b. An zumindest einer der beiden Längsseiten 11, 12 sind in vorbestimmten und gleichmäßigen Abständen angeordnete Markierungen 13 vorgesehen, die vorzugsweise die Form einer Kerbe aufweisen. Die Abstände liegen im Bereich zwischen 8 und 15 mm. Die Platte 3 wird je nach der zur Verfügung stehenden Auflagefläche und der Anzahl der zu befestigenden Kabel gegebenenfalls mittels der Markierungen 13 in Teilplatten geteilt. An diesen Stellen wird die Platte 3 durch Sägen oder Schneiden oder andere Verfahren durchtrennt. Dadurch ergeben sich Teilplatten einer bestimmten vorbekannten Länge.

Auf der Oberseite 5 der Platte 3 sind zwei Reihen von Ösen 15 vorgesehen, die einstückig mit der Platte 3 ausgebildet sind und die sie von der Oberseite aus nach oben erheben. Die Ösen 15 weisen jeweils eine längliche Gestalt auf, die sich in ihrer Längsrichtung in Richtung der mittels Kabelbinder 15a zu befestigenden Kabel 15b, also quer zur Längsrichtung der Platte 3 erstreckt. Die erste Reihe von Ösen 16 sowie die zweite Reihe von Ösen 17 verläuft jeweils in Längsrichtung 9. Die Ösen 15 der Reihen 16, 17 sind so angeordnet, daß sie abwechselnd versetzt zueinander auf der Platte 3 gelegen sind, wobei sie sich in ihre Längsrichtung vorzugsweise gegenseitig teilweise überlappen.

Der Abstand der Ösen 15 jeder Reihe liegt im Bereich zwischen 8 und 15 mm und beträgt vorzugsweise 10 mm. Die Höhe 18 der Ösen 15, d.h. der Abstand zwischen deren Oberseite 19 und der Oberseite 5 der Platte 3 liegt im Bereich zwischen 4 und 8 mm und beträgt vorzugsweise 6 mm. Die Breite 21 der Ösen 15 liegt im Bereich zwischen 4 und 6 mm und beträgt vorzugsweise 5 mm. Die Dicke 23 der Ösen liegt im Bereich zwischen 1 und 4 mm und beträgt vorzugsweise 2 mm. Die lichte Weite 19a der Ösen 15 liegt im Bereich zwischen 8 und 12 mm und beträgt vorzugsweise 10 mm. Die genannten Masse der Ösen 15 sind dadurch bestimmt, daß bei dem vorgesehenen Material eine gute Herstellbarkeit sowie eine ausreichende Festigkeit und Belastbarkeit für den Fahrzeugbau und insbesondere für Luftfahrzeuge gewährleistet ist.

Das Material des erfindungsgemäßen Kabelhalters 1 ist Polyetheretherketon. Dieses Material kann auch mit 10 bis 30 Masse% Glasfasern versehen sein, wobei vorzugsweise 30 Masse-% Glasfasern vorgesehen sind.

Bei der Verwendung des erfindungsgemäßen Kabelhalters 1 wird die Platte 3 an den für die vorgesehene Auflagefläche der Fahrzeugstruktur geeigneten Markierungen durchgesägt, so daß sich eine geeignete Länge der Platte 3 ergibt. Anschließend wird die Platte 3 auf die vorgesehene Auflagefläche der Fahrzeugstruktur aufgeklebt. Als Klebstoff wird dabei ein Zwei-Komponenten-Polyurethan-Elastomer-Klebstoff verwendet. Nach dem Aushärten des Klebstoffs sind die Kabel, die auch die Form von Kabelbündeln haben können, mittels aus dem Stand der Technik bekannten Kabelbindern auf der Platte 3 zu befestigen.

## Patentansprüche

1. Kabelhalter zur Befestigung von Kabeln (15b) mittels Kabelbindern (15a) innerhalb einer Fahrzeugstruktur mit einer sich in Längsrichtung (9) erstreckenden länglichen Platte (3) mit einer Oberseite (5) und einer Unterseite (7) **dadurch gekennzeichnet, daß** die unterseite (7) zur Aufbringung auf einer Auflagefläche der Fahrzeugstruktur mittels eines Klebstoffs augestaltet ist, wobei die Platte zumindest an einer Längseite (12) in vorbestimmten Abständen vorgesehene Markierungen (13) aufweist, um aus der Platte (3) Teilplatten vorbestimmter Länge herzustellen, wobei auf der Oberseite (5) sich von dort erhebende Ösen (15) in einer ersten (16) und einer zweiten (17) Reihe derart angeordnet sind, daß jeweils eine Öse der ersten Reihe (16) versetzt zu und abwechselnd mit einer anderen Öse der zweiten Reihe (17) angeordnet ist, wobei die Ösen in gleichmäßigen Abständen angeordnet sind, und zur Aufnahme der Kabelbinder (15 a) augestaltet sind.

2. Kabelhalter nach dem Anspruch 1, **dadurch gekennzeichnet, daß** dieser einstückig aus und aus Polyetheretherketon gebildet ist.

3. Kabelhalter nach dem Anspruch 2, **dadurch gekennzeichnet, daß** dieser zusätzlich zu 10 bis 30 Masse-% Glasfasern enthält.

4. Kabelhalter nach einem der voranstehenden Ansprüche, **dadurch gekennzeichnet, daß** jede Öse eine lichte Weite im Bereich zwischen 8 und 12 mm aufweist.

5. Kabelhalter nach einem der voranstehenden Ansprüche, **dadurch gekennzeichnet, daß** der Abstand zwischen jeweils zwei Ösen der Reihen (16, 17) im Bereich zwischen 8 und 15 mm liegt.

6. Kabelhalter nach einem der voranstehenden Ansprüche, **dadurch gekennzeichnet, daß** die Höhe der Ösen im Bereich zwischen 4 und 8 mm und die Breite der Ösen zwischen 4 und 6 mm liegt.

7. Kabelhalter nach einem der voranstehenden Ansprüche, **dadurch gekennzeichnet, daß** die Unterseite (7) gekrümmt ist, um eine über den ganzen Bereich der Teilplatte auf der vorgesehenen Auflagefläche aufliegende Klebefläche zu bilden.

8. Kabelhalter nach einem der voranstehenden Ansprüche, **dadurch gekennzeichnet, daß** der Klebstoff ein Zwei-Kompnenten-Polyurethan-Elastomer-Klebstoff ist.

## Claims

1. Cable holder for the fastening of cables (15b) by means of cable ties (15a) within a vehicle structure with an elongated plate (3) which extends in the longitudinal direction (9) and has an upper face (5) and a lower face (7), **characterized in that** the lower face (7) is designed for mounting on a contact surface of the vehicle structure by means of an adhesive, wherein the plate has markings (13) which are provided at predetermined intervals at least on a longitudinal face (12), in order to produce plate elements of a predetermined length from the plate (3), wherein eyes (15) which project from the upper face (5) are arranged in a first row (16) and a second row (17) on said face, such that in each case one eye in the first row (16) is arranged offset with respect to and alternately with another eye in the second row (17), wherein the eyes are arranged at uniform intervals and are designed to hold the cable ties (15a).

2. Cable holder according to Claim 1, **characterized in that** the cable holder is formed integrally from polyetheretherketone.

3. Cable holder according to Claim 2, **characterized in that** the cable holder additionally contains up to 10 to 30% by mass of glass fibres.

4. Cable holder according to one of the preceding claims, **characterized in that** each eye has an unobstructed width in the range between 8 and 12 mm.

5. Cable holder according to one of the preceding claims, **characterized in that** the distance between in each case two eyes in the rows (16, 17) is in the range between 8 and 15 mm.

6. Cable holder according to one of the preceding claims, **characterized in that** the height of the eyes is in the range between 4 and 8 mm, and the width of the eyes is between 4 and 6 mm.

7. Cable holder according to one of the preceding claims, **characterized in that** the lower face (7) is curved in order to form an adhesive surface which rests on the intended contact surface over the entire area of the plate element.

8. Cable holder according to one of the preceding claims, **characterized in that** the adhesive is a two-component polyurethane-elastomer adhesive.

## Revendications

1. Support de câble destiné à fixer des câbles (15b) au moyen de liens de câble (15a) à l'intérieur de la structure d'un véhicule et présentant une plaque allongée (3) qui s'étend dans le sens de la longueur (9) et dotée d'un côté supérieur (5) et d'un côté inférieur (7),
**caractérisé en ce que**
le côté inférieur (7) est configuré pour être appliqué sur une surface de pose de la structure du véhicule au moyen d'un adhésif, la plaque présentant au moins sur un côté longitudinal (12) des repères (13) prévus à des distances prédéterminées pour établir sur la plaque (3) des parties de plaque de longueur prédéterminée, des oeillets (15) qui débordent du côté supérieur (5) étant disposés en une première série (16) et une deuxième série (17) en décalant un oeillet de la première série (16) en alternance avec un autre oeillet de la deuxième rangée (17), les oeillets étant disposés à intervalles réguliers et étant configurés pour reprendre les liens de câble (15a).

2. Support de câble selon la revendication 1, **caractérisé en ce qu'**il est réalisé d'une seule pièce et en polyétheréthercétone.

3. Support de câble selon la revendication 2,
**caractérisé en ce qu'**il contient de plus de 10 à 30 % en poids de fibres de verre.

4. Support de câble selon l'une des revendications précédentes, **caractérisé en ce que** chaque oeillet présente une largeur intérieure de l'ordre de 8 à 12 mm.

5. Support de câble selon l'une des revendications précédentes, **caractérisé en ce que** la distance entre deux oeillets des rangées (16, 17) est comprise dans la plage de 8 à 15 mm.

6. Support de câble selon l'une des revendications précédentes, **caractérisé en ce que** la hauteur des oeillets est comprise dans la plage de 4 à 8 mm et la largeur des oeillets dans la plage de 4 à 6 mm.

7. Support de câble selon l'une des revendications précédentes, **caractérisé en ce que** le côté inférieur (7) est incurvé pour former une surface adhésive qui repose par toute la zone formée par la partie de plaque sur la surface prévue pour le poser.

8. Support de câble selon l'une des revendications précédentes, **caractérisé en ce que** l'adhésif est un adhésif à deux composants, polyuréthane et élastomère.
